# EUROPEAN PATENT APPLICATION

(11) **EP 4 748 724 A1**
(43) Date of publication of application: **27.05.2026**
(21) Application number: 24845455.5
(22) Date of filing: 12.07.2024
(51) Int. Cl.: B64U 20/65, B64U 10/13, B64U 20/50, B64U 30/293

(54) **DRONE ARM AND DRONE**

(30) Priority: 21.07.2023 JP 2023119340
(71) Applicant: Mitsui Chemicals, Inc., Tokyo 104-0028 (JP)
(72) Inventor: KOYAISHI, Tatsuya, Sodegaura-shi, Chiba 299-0265 (JP); NISHIDA, Atsumi, Sodegaura-shi, Chiba 299-0265 (JP); MIZUMOTO, Kazuya, Sodegaura-shi, Chiba 299-0265 (JP)
(74) Representative: Hoffmann Eitle
(86) International application number: PCT/JP2024/025282
(87) International publication number: WO 2025/023074

(57) **Abstract**

Provided is a drone arm with increased rigidity. The arm, which is attached to a housing of a drone, comprises: a body part to be disposed outside the housing; and a flange disposed on the outside laterally of the body part. The body part and the flange are made of a fiber-reinforced resin including reinforcing fibers and a thermoplastic resin.

## Description

### Technical Field

The present invention relates to an arm for a drone and a drone.

### Background Art

A drone including a housing in which a battery and other components are disposed, a plurality of rotors for flying the drone, and an arm for holding the rotors at positions outside the housing and away from the housing is known. PTL 1 discloses an exemplary drone arm made from a laminated structure obtained by stacking a plurality of fiber-reinforced resin sheets in which fibers are woven, and a cylindrical body obtained by molding the laminated structure into a cylindrical shape is used as the drone arm. PTL 1 describes that the arm obtained by molding the laminated structure is lightweight and has high rigidity.

### Citation List

### Patent Literature

PTL 1
Japanese Patent Application Laid-Open No. 2018-118530

### Summary of Invention

### Technical Problem

As disclosed in PTL 1, by using a fiber-reinforced resin as a material, it is possible to reduce a weight of an arm while also increasing a rigidity of the arm. As drone applications have become more diverse in recent years, drones are being required to be stronger than ever before. Therefore, there is a demand to increase the rigidity of the components in the drone, such as the arm, more than in conventional components.

The present invention has been made in view of the above demand, and an object of the present invention is to provide an arm for a drone having increased rigidity and a drone including the arm for a drone.

### Solution to Problem

An aspect of the present invention for achieving the above object relates to arms for a drone as described in the following [1] to [9].
[1] An arm for a drone, the arm being configured to be attached to a housing of the drone, the arm including:
   a main body portion to be disposed outside the housing; and
   a flange disposed laterally outside the main body portion, in which
   the main body portion and the flange are made of a fiber-reinforced resin containing a reinforcing fiber and a thermoplastic resin.
[2] The arm according to [1], in which:
   the arm includes a fastening hole for fastening the arm to the housing; and
   the fastening hole is disposed in the flange.
[3] The arm according to [1] or [2], in which:
   the main body portion includes a base portion and an extending portion, the base portion being configured to be fastened to the housing, the extending portion extending outward from the base portion; and
   the flange is disposed on the base portion.
[4] The arm according to [3], in which:
   the flange is disposed on the base portion and the extending portion; and
   a protruding width of the flange at the base portion is greater than a protruding width of the flange at the extending portion.
[5] The arm according to [4], in which:
   the main body portion includes a distal end portion disposed at a distal end of the extending portion, the distal end portion being a portion to which a separate member is to be attached; and
   the distal end portion includes the flange.
[6] The arm according to any one of [1] to [5], in which
   the flange is integrally molded with the main body portion.
[7] The arm according to any one of [1] to [6], further including:
   a reinforcing rib inside the main body portion.
[8] The arm according to any one of [1] to [7], in which
   the main body portion has a shape of a rod with at least one surface of surfaces along a longitudinal direction of the main body portion being open.
[9] The arm according to any one of [1] to [8], in which
   the main body portion and the flange include a unidirectional layer, the unidirectional layer containing carbon fibers arranged to be oriented in one direction and a thermoplastic resin.
   Another aspect of the present invention for achieving the above object relates to drones as described in the following [10] and [11].
[10] A drone including:
   the arm according to any one of [1] to [9]; and
   a housing to which the arm is fastened.
[11] The drone according to [10], in which:
   the arm is fastened to the housing via a hinge; and
   the arm is foldable by bending of the hinge.

### Advantageous Effects of Invention

The present invention can provide an arm for a drone with increased rigidity and a drone including the arm for a drone.

### Brief Description of Drawings

FIG. 1 is a schematic view illustrating the appearance of a drone according to an embodiment of the present invention;
FIG. 2 is a perspective view illustrating the appearance of the arm as viewed obliquely from above;
FIG. 3 is a perspective view illustrating the appearance of the arm as viewed obliquely from below;
FIG. 4 is an exploded perspective view illustrating a state in which the arm is being fastened to a housing;
FIG. 5 is a bottom view illustrating an overall configuration of the arm;
FIG. 6 is a perspective view illustrating a disposition of ribs in the same manner as FIG. 3 illustrating the appearance of the arm as viewed obliquely from below;
FIG. 7 is a partially enlarged view of one portion among the portions indicated by dotted lines in FIG. 6;
FIG. 8 is a bottom view illustrating a state in which a holding portion holds a wire;
FIG. 9 is a perspective view illustrating the appearance of the periphery of an opening as viewed obliquely from below, illustrating an exemplary configuration of a protruding portion;
FIG. 10 is a bottom view illustrating the appearance of the periphery of the opening as viewed from below, illustrating a state in which the wire is taken out from the opening;
FIG. 11 is a side view of the arm illustrating a state in which the wire taken out from the opening is connected to a motor;
FIG. 12 is a perspective view illustrating the appearance of the periphery of the opening as viewed obliquely from below, illustrating another exemplary configuration of the protruding portion; and
FIG. 13 is a side view illustrating an overall configuration of the arm.

### Description of Embodiments

### [Embodiment 1]

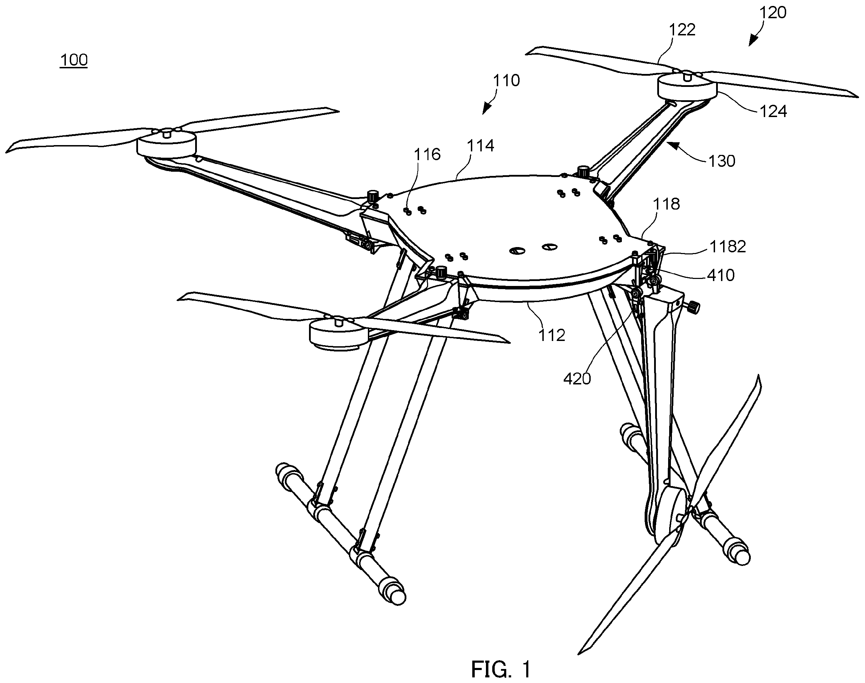

FIG. 1 is a schematic view illustrating the appearance of a drone according to an embodiment of the present invention. Drone 100 includes housing 110, rotor unit 120, and a plurality of (four in the present embodiment) arms 130.

Housing 110 includes a box-shaped lower body 112 having an opening on the upper surface thereof and a box-shaped upper body 114 having an opening on the lower surface thereof. Lower body 112 and upper body 114 are disposed with the respective opening surfaces thereof facing each other and are fastened to each other by a plurality of fastening screws 116. A battery (not illustrated) is disposed in a space (a space between lower body 112 and upper body 114) inside housing 110 formed by the fastening. Housing 110 has a monocoque structure that maintains the strength thereof with a wall surface, thereby reducing unnecessary components to reduce its weight.

In the present embodiment, housing 110 is a hollow box-shaped member having a substantially square shape in plan view with four curved sides that bulge outward. Attachment portion 118 for attaching arm 130 is disposed at each of four corners of the substantially square shape. Attachment portion 118 is a box-shaped portion that projects in the protruding direction of arm 130, and introduction port 1182 for guiding wire 410 from the battery to the arm is formed on an outer side the attachment portion. Arm 130 is attached to attachment portion 118 via hinge 420 and can be folded downward from housing 110 by bending of hinge 420.

Rotor unit 120 is disposed at a distal end of each of the four arms 130. Each rotor unit 120 includes a plurality of (two in the present embodiment) rotors 122 and motor 124 for rotating rotor 122. Motor 124 is disposed at a distal end portion of arm 130. In addition, wire 410 from the battery disposed in housing 110 is connected to motor 124. Motor 124 rotates rotor 122 using power supplied via wire 410.

Arm 130 is a rod-shaped member having a shape that extends linearly outward from housing 110. Arm 130 holds rotor unit 120 at the distal end thereof. Arm 130 generates a predetermined distance between rotor 122 and housing 110 and between rotors 122 disposed on the respective arms 130. As a result, arm 130 prevents the rotating rotor 122 from colliding with housing 110 and prevents the rotating rotors 122 from colliding with each other. Arm 130 may have a shape that allows curving or bending between its ends. In addition, in the present embodiment, arm 130 extends in a direction from the center of gravity of housing 110 toward the outer side, but may extend in a direction at a predetermined angle with respect to the direction toward the outer side.

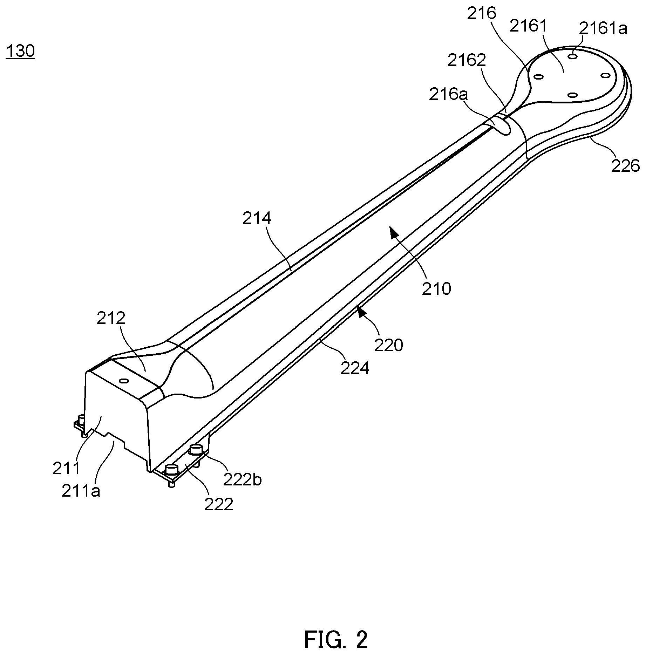

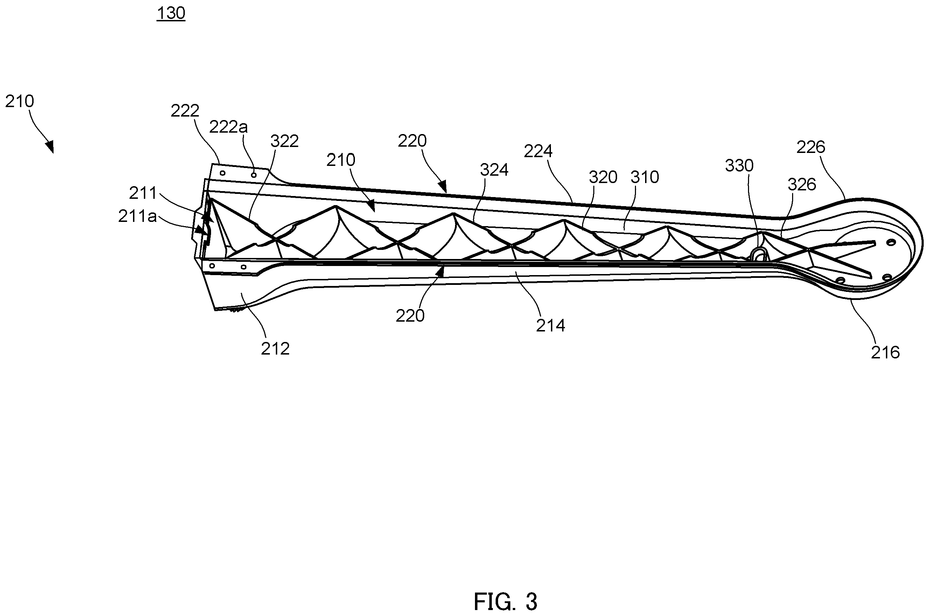

FIG. 2 is a perspective view illustrating the appearance of arm 130 as viewed obliquely from above. FIG. 3 is a perspective view illustrating the appearance of arm 130 as viewed obliquely from below. As illustrated in FIGS. 2 and 3, arm 130 includes main body portion 210 attached to the outside of housing 110 and flange 220 disposed on the outer side of main body portion 210. Main body portion 210 has a semi-cylindrical shape having an open lower surface. Flange 220 is disposed on the lower end portion of a side surface of main body portion 210, which has the semi-cylindrical shape, in a direction along the extending direction of main body portion 210 in the side surface direction of main body portion 210.

As illustrated in FIGS. 2 and 3, main body portion 210 includes the following: base portion 212 for attaching arm 130 to housing 110; extending portion 214 that extends outward from the base portion; and distal end portion 216 to which rotor unit 120 is attached and which is connected to the distal end of extending portion 214.

Base portion 212 is a portion for attaching arm 130 to housing 110. In the present embodiment, base portion 212 is fastened to hinge 420 by inserting fastening screw 222b into fastening hole 222a formed in flange 222 and is attached to housing 110 via hinge 420. Base wall 211 is formed on a side of base portion 212-the side in contact with housing 110. Opening 211a for introducing the wire from attachment portion 118 into the outer shell of base portion 212 is formed in base wall 211.

Extending portion 214 is a connecting portion that linearly connects base portion 212 with distal end portion 216 and has a shape such that its width decreases toward distal end portion 216. In addition, extending portion 214 has a shape such that its height with respect to housing 110 serving as a reference increases from base portion 212 toward distal end portion 216. Extending portion 214 may have a shape that allows curving or bending at a position between its ends.

Distal end portion 216 includes the following: holding portion 2161 having a circular shape in plan view and for holding rotor unit 120; and connection portion 2162 for connecting to extending portion 214. Distal end portion 216 has a shape such that a circular surface of holding portion 2161 is horizontal with respect to housing 110 and hinge 420. A plurality of (four in the present embodiment) fastening holes 2161a for fastening rotor unit 120 are formed in holding portion 2161. In addition, opening 216a for taking out wire 410 from the inside to the outside of arm 130 is formed in connection portion 2162.

In the present embodiment, flange 220 is disposed at each of base portion 212, extending portion 214, and distal end portion 216.

In the present embodiment, flange 222 disposed at base portion 212 has a greater protruding width in the outward direction from main body portion 210 than flange 224 and flange 226 disposed at extending portion 214 and distal end portion 216, respectively. Flange 222 disposed at base portion 212 includes fastening holes 222a (illustrated in FIG. 3) into which fastening screws 222b (illustrated in FIG. 2) for attaching arm 130 to housing 110 via hinge 420 are respectively inserted. Fastening holes 222a are nut members disposed at two positions, one at the front and one at the rear, in each of flanges 222 on both sides.

Arm 130 illustrated in FIGS. 2 and 3 includes main body portion 210 having a top surface and a side surface and flange 220 that extends laterally from the lower end portion thereof. Arm 130 includes a lower surface that is open and has a hat-shaped cross section. Arm 130 has an increased cross-sectional second moment of area due to the presence of flange 220 extending laterally with respect to main body portion 210, and thus rigidity is increased. However, the shape of arm 130 is not limited to this shape, and for example, a flange may be disposed on a cylindrical main body portion.

The protruding width of flange 220 can be set in consideration of a balance between an effect of improving the rigidity and a change in aerodynamics due to flange 220. For example, the protruding widths of flange 224 disposed at extending portion 214 and flange 226 disposed at distal end portion 216 can be set to be 0% or more and 10% or less with respect to the width of main body portion 210 (the width in a direction connecting the side surfaces of main body portion 210) at the respective locations thereof, and the protruding widths are preferably more than 0% and 10% or less, more preferably 2% or more and 6% or less. In addition, the protruding width of flange 222 disposed at base portion 212 can be set to be 8% or more and 20% or less with respect to the width of base portion 212 (the width in the direction connecting the side surfaces of base portion 212), and it is preferable that the protruding width is 10% or more and 15% or less.

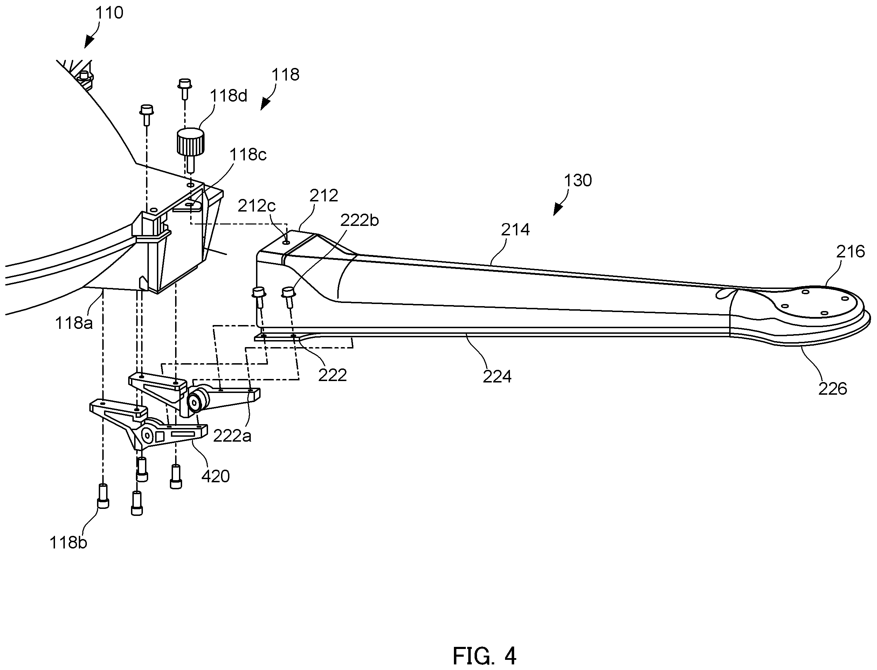

FIG. 4 is an exploded perspective view illustrating a state in which arm 130 is being fastened to housing 110. Attachment portion 118 of housing 110 includes fastening hole 118a into which fastening screw 118b is inserted on the lower surface side. Fastening holes 118a are through holes formed at two positions, one at the front and one at the rear, on the lower surface of attachment portion 118, at positions corresponding to flange 222 of arm 130.

Arm 130 is attached to attachment portion 118 via a pair of hinges 420 that are both bendable. Specifically, one end of each hinge 420 is attached to attachment portion 118 by fastening screws 118b, and the other end of each hinge 420 is attached to flange 222 by fastening screws 222b. As a result, arm 130 can be folded downward with respect to housing 110 in a case of storing drone 100 or the like.

A ring-shaped projecting portion 118c is formed to project from the upper surface side of attachment portion 118 toward arm 130. Nut portion 212c is formed at a position corresponding to projecting portion 118c on the upper surface of base portion 212. At the time of extending arm 130 (at the time of flying drone 100), the attachment screw 118d is inserted into projecting portion 118c and nut portion 212c to restrict the bending of arm 130.

In a conventional drone, a cylindrical arm holder is attached to the housing side end portion of a cylindrical arm to cover the housing side end portion, and the arm holder is attached to the hinge, thereby attaching the arm to the housing. In such an attachment method, in order to insert a screw for attaching the arm holder, it is necessary to form a hole for insertion in a part of the cylindrical arm main body portion by post-processing after forming the cylindrical arm. In addition, the strength of the housing side end portion of the arm may be reduced due to the hole forming. In order to prevent the decrease in strength due to the hole forming, it is necessary to bond a member for attachment such as the arm holder to the arm with an adhesive, but there is a limit to the bonding strength that could be achieved with adhesive, which meant that it is not possible to accommodate larger drones or improve durability.

On the other hand, in the present embodiment, fastening hole 222a is formed in flange 222, and arm 130 is attached to housing 110 by this fastening hole 222a. Therefore, it is not necessary to form a hole in main body portion 210, and the strength of arm 130 is not reduced due to the hole forming. In addition, since arm 130 can be attached to housing 110 by fastening using fastening screw 222b, the fastening strength can be increased, and the durability of the fastening portion can also be increased.

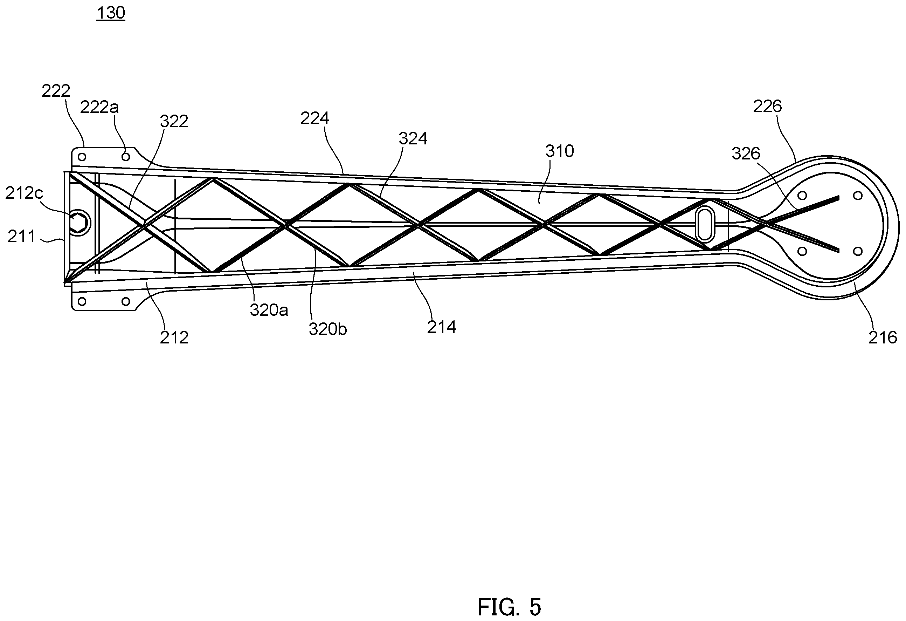

FIG. 5 is a bottom view illustrating an overall configuration of arm 130. As illustrated in FIGS. 3 and 5, arm 130 includes ribs 320 (ribs 322, 324, and 326)-the ribs having a shape that extends toward the opened surface (lower surface) side-inside outer shell 310 constituting the upper surface and the side surface of main body portion 210 (base portion 212, extending portion 214, and distal end portion 216). In the present embodiment, ribs 320 are reinforcing ribs provided to increase the rigidity of main body portion 210 (particularly, the rigidity with respect to a stress in the twisting direction). The shape of ribs 320 is not particularly limited. In the present embodiment, ribs 320 have a shape such that two plate-shaped ribs 320a and 320b are disposed to intersect each other. Each plate-shaped rib is disposed obliquely with respect to the extending direction of arm 130 so as to linearly connect outer shell 310 constituting one side surface with outer shell 310 constituting the other side surface, and the two plate-shaped ribs intersect at the central axis of arm 130.

In extending portion 214, the angle formed by each of the plate-shaped ribs 320a and 320b with respect to the extending direction of arm 130 changes along the extending direction of extending portion 214. Specifically, on the base portion 212 side where the width of extending portion 214 is larger, the angle formed by each plate-shaped rib with respect to the extending direction of arm 130 (the angle that is an acute angle among the angles formed by the plate-shaped rib) is larger. On the other hand, on the distal end portion 216 side where the width of extending portion 214 is smaller, the angle formed by each plate-shaped rib with respect to the extending direction of arm 130 (the angle that is an acute angle among the angles formed by the plate-shaped rib) is smaller. In this manner, arm 130 includes ribs 320 densely arranged on base portion 212 side, where higher rigidity is required, and less densely arranged ribs 320 on distal end portion 216 side, thereby reducing the weight of main body portion 210.

The height of each plate-shaped rib (the length from the contact point between outer shell 310 constituting the top surface and the plate-shaped rib to the lower end portion of the plate-shaped rib) is not particularly limited, but is preferably smaller than the height of outer shell 310 constituting the side surface (the length along a straight line on the plate-shaped ribs, from the contact point between outer shell 310 constituting the top surface and the plate-shaped rib to the lower end portion of outer shell 310 constituting the side surface).

As illustrated in FIGS. 3 and 5, in arm 130, main body portion 210 (base portion 212, extending portion 214, and distal end portion 216), flanges 220 (flange 222, flange 224, and flange 226), and ribs 320 (ribs 322, ribs 324, and ribs 326) are integrally molded.

As illustrated in FIG. 5, in the present embodiment, all of base portion 212, extending portion 214, and distal end portion 216 include flanges 220 (flange 222, flange 224, and flange 226), and all of base portion 212, extending portion 214, and distal end portion 216 include ribs 320 (ribs 322, ribs 324, and ribs 326). However, flanges 220 and ribs 320 may be formed only at any of the portions depending on the characteristics of the portions.

For example, base portion 212 is a portion used for fastening to housing 110. In addition, base portion 212 is also a portion that requires rigidity for supporting the weight of arm 130 and rotor unit 120. Therefore, it is preferable that base portion 212 includes flange 222. Flange 222 included in base portion 212 can be used as a fastening portion and can also increase the rigidity of base portion 212. In addition, by using flange 222 as the fastening portion, it is not necessary to form a hole in main body portion 210, thereby also preventing the decrease in rigidity of main body portion 210 due to the hole forming. On the other hand, when the rigidity is sufficiently increased by flange 222, base portion 212 does not have to include ribs 322, thereby reducing the weight of arm 130.

In addition, extending portion 214 is a portion that requires resistance to stress in the twisting direction that occurs during flight of drone 100. Therefore, it is preferable that extending portion 214 includes ribs 324. Ribs 324 included in extending portion 214 can increase the rigidity of extending portion 214 and prevent the breakage due to the stress in the twisting direction. On the other hand, extending portion 214 may or may not include flange 224 depending on the aerodynamic characteristics.

In addition, distal end portion 216 is a portion that holds rotor unit 120. Distal end portion 216 may or may not include flange 226 and ribs 326 as long as the strength for holding rotor unit 120 is obtained.

The presence or absence of flanges 220 and ribs 320 described above is merely an example, and it goes without saying that the disposition of flanges 220 and ribs 320 can be changed depending on the characteristics (for example, rigidity and aerodynamic characteristics) required for each portion of arm 130. For example, the following configuration is possible: flange 222 is not provided at base portion 212, and flange 224 or flange 226 is provided at extending portion 214 or distal end portion 216. Another configuration is also possible: ribs 324 are not provided at extending portion 214, and ribs 322 or ribs 326 are provided at base portion 212 or distal end portion 216.

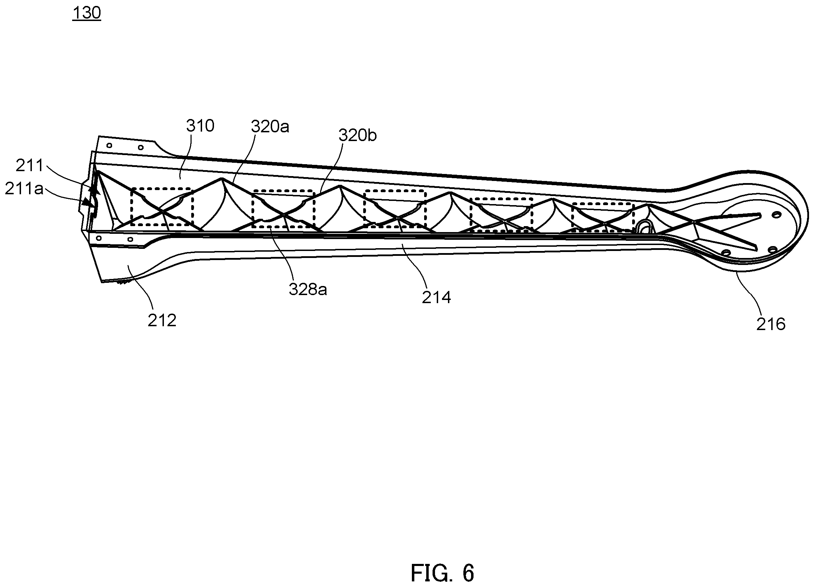

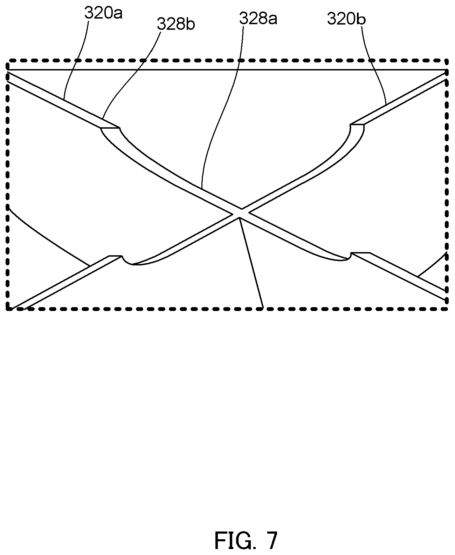

FIG. 6 is a perspective view illustrating a disposition of the ribs in the same manner as FIG. 3 illustrating the appearance of arm 130 as viewed obliquely from below. FIG. 7 is a partially enlarged view of one portion among the portions indicated by dotted lines in FIG. 6. As illustrated in FIGS. 6 and 7, in the present embodiment, the height of each plate-shaped rib is not constant. In other words, each plate-shaped rib has a plurality of heights. Specifically, in each plate-shaped rib, the height at an intersection portion where the plate-shaped ribs intersect each other is lower than the height at a position where each plate-shaped rib is in contact with outer shell 310 constituting the side surface. Portions 328a-each portion having a lower height of the rib-formed at the intersection portion is continuously formed in a linear shape along the central axis of arm 130 inside outer shell 310 at base portion 212, extending portion 214, and distal end portion 216. Portion 328a having a lower height of the rib serves as a holding portion that holds the wire in the present embodiment.

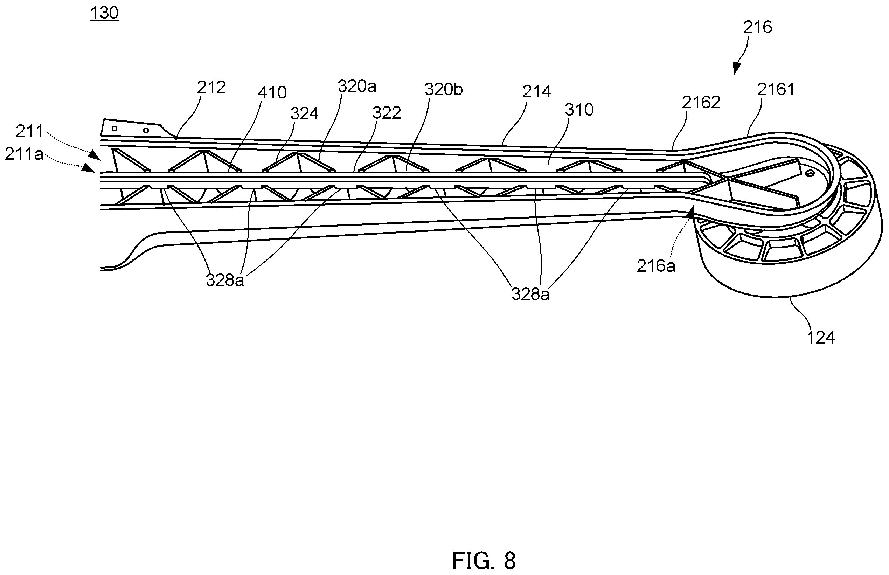

FIG. 8 is a bottom view illustrating a state in which the holding portion holds the wire. Motor 124 is also illustrated in FIG. 8.

Wire 410 taken into base portion 212 through opening 211a of base wall 211 is held by portions 328a having a lower height-each portion is formed at the intersection portion of the two plate-shaped ribs in base portion 212. In the present embodiment, the height of opening 211a is the same as the height of portion 328a having a lower height. In addition, opening 211a is disposed on the central axis of arm 130 when arm 130 is viewed in plan view. Therefore, wire 410 taken into the inside of base portion 212 is held by portion 328a having a lower height without curving (still in a linear shape).

Wire 410 held by portion 328a having a lower height is held in the following manner: the wire is held without curving (in a linear shape) by portion 328a having a lower height, which is formed at the intersection portion of the two plate-shaped ribs in extending portion 214. Wire 410 is continuously held by a plurality of portions 328a having a lower height-the plurality of portions 328a are continuously formed in extending portion 214-without curving (in a linear shape).

The width of each of the portions having a lower height in base portion 212 and extending portion 214 (the width in a direction connecting the side surfaces of the outer shell) is constant and matches the width of wire 410. Therefore, wire 410 is held by the holding portion (portion 328a having a lower height of the rib) in such a way that the upper surface of the wire is in contact with the portion, which has a lower height in the rib, and the side surfaces of the wire are in contact with portions 328b, which have a higher height and are located on both sides of the portion having a lower height of the rib.

In connection portion 2162 of distal end portion 216, opening 216a for taking out wire 410 to the outside is formed in outer shell 310. Wire 410 is curved at a portion of opening 216a and is taken out to the outside of outer shell 310.

Arm 130 of the present embodiment having such a configuration fixes wire 410 in its inside. Therefore, when drone 100 is subjected to an impact, wire 410 is less likely to be displaced or pulled, and wire 410 is thus less likely to be cut due to the displacement or the pulling.

In addition, main body portion 210 of arm 130 has a shape of a semi-cylindrical shape having an open lower surface. Further, a portion having a different height is formed in a part of ribs 320 to serve as a holding portion for the wire. Arm 130 has a shape of a rod such that at least one surface of the surfaces (of the rod) along the longitudinal direction of the rod is open. After arm 130 is molded, wire 410 can be easily fixed (embedded into portion 328a having a lower height) from the opened surface side (the lower side in the present embodiment). As a result, the wiring connection between the battery in housing 110 and motor 124 disposed at distal end portion 216 can also be easily performed.

The configuration of the holding portion is not limited to the above-described aspect. The portion having a lower height in the rib is at least formed along the wiring path of wire 410, for example, and the portions having a lower height may be formed at positions (for example, along the side surface of arm 130) deviating from the central axis of arm 130, or a hole may be formed in the rib to allow wire 410 to pass through the hole, thereby holding the wire.

Alternatively, the following configuration is possible: another holding member for holding wire 410 is disposed inside arm 130, and wire 410 is held by this holding member. This holding member can be fixed to outer shell 310 by, for example, an adhesive or fastening. By using such a holding member, the wire can be held even inside the cylindrical arm. In this case, the holding member may be inserted through the end portion of the cylindrical arm and fixed at a predetermined position, or an opening may be partially provided in the side surface of the cylindrical arm to insert the holding member through the opening.

In addition, in the present embodiment, at a portion where wire 410 is curved, the peripheral edge of opening 216a protrudes toward the inside of outer shell 310 to form protruding portion 330. Protruding portion 330 is a cylindrical member composed of a standing wall formed perpendicular to outer shell 310 constituting the top surface.

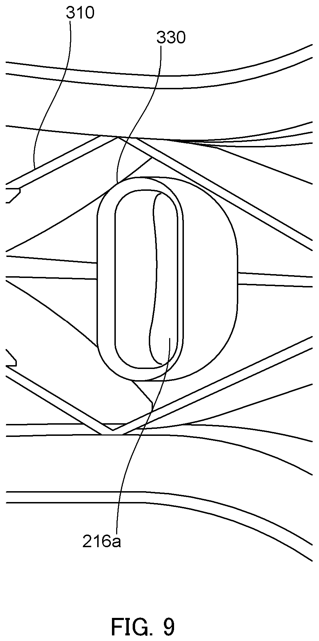

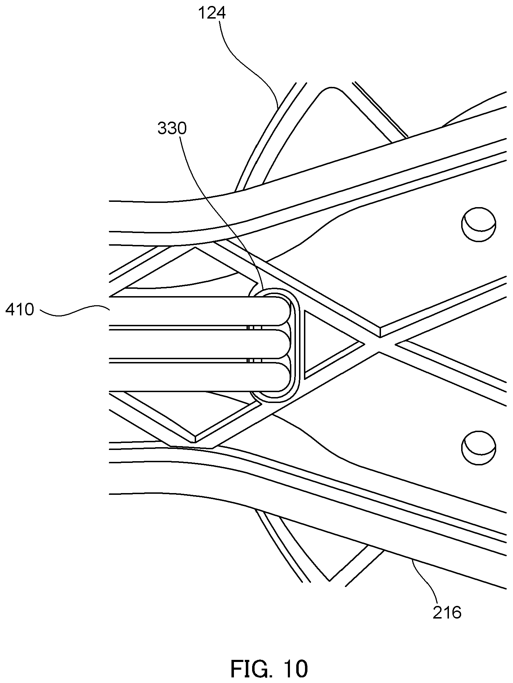

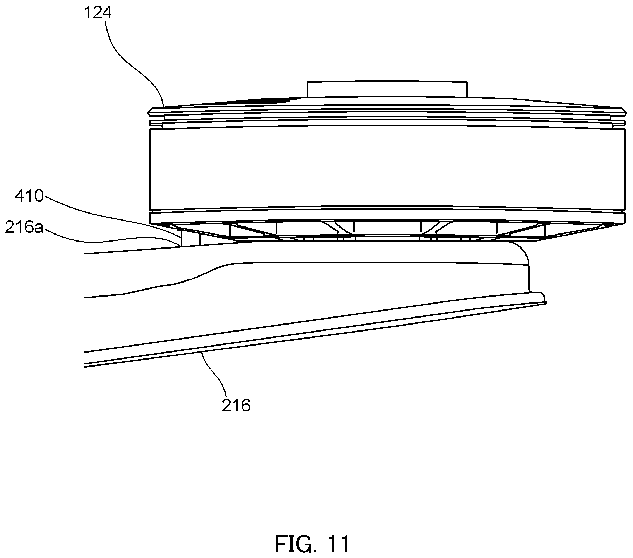

FIG. 9 is a perspective view illustrating the appearance of the periphery of opening 216a as viewed obliquely from below, illustrating an exemplary configuration of protruding portion 330. FIG. 10 is a bottom view illustrating the appearance of the periphery of opening 216a as viewed from below, illustrating a state in which wire 410 is taken out through opening 216a. FIG. 11 is a side view of arm 130 illustrating a state in which wire 410 taken out through opening 216a is connected to motor 124.

As illustrated in FIG. 10, wire 410 that has extended inside outer shell 310 along the bottom surface of rib 320 is curved along a standing wall of protruding portion 330-the standing wall is located on the housing 110 side. The curved wire 410 extends upward along the standing wall and is taken out through opening 216a to the outside of outer shell 310. As illustrated in FIG. 11, a wiring port of motor 124 is disposed above opening 216a, and the taken-out wire 410 is connected to motor 124 without curving.

The height of protruding portion 330 (the length from an intersection between outer shell 310 constituting the top surface and protruding portion 330 to the lower end portion of protruding portion 330) is not particularly limited, but is preferably a height corresponding to the height at which wire 410 is disposed inside outer shell 310. In the example illustrated in FIGS. 8 to 10, the height of protruding portion 330 is the same as the height at which wire 410 is disposed. As a result, the angle at which the wire is curved along protruding portion 330 can be set to a gentle angle of about 90°, and the damage to the wire due to the curving can be suppressed.

For example, by setting the height of opening 211a (for taking in wire 410) provided in base wall 211 and the height of protruding portion 330 (more specifically, the height at which the wire is curved in protruding portion 330) to the same height, the height at which wire 410 is disposed and the height of protruding portion 330 can be set to the same height. In addition, in the present embodiment, ribs 320 form portion 322a having a lower height of the rib at an intersection portion of the plate-shaped ribs 320a and 320b, and wire 410 is held by embedding wire 410 in portion 328a having a lower height (see FIGS. 6 to 8). The height at which wire 410 is disposed and the height of protruding portion 330 may be set to the same height by setting the height at which the wire is held by the holding portion for holding wire 410 (the length from an intersection between outer shell 310 constituting the top surface and the plate-shaped ribs to a portion where the wire is held by portion 328a having a lower height) and the height of protruding portion 330 (more specifically, the height at which the wire is curved in protruding portion 330) to the same height. The height of protruding portion 330 does not need to be the same as the height of opening 211a or the height of portion 328a having a lower height. For example, when the height of opening 211a and the height of portion 328a having a lower height are different, the height of protruding portion 330 may be set in such a way that a position where the wire is curved at protruding portion 330 is on a straight line connecting opening 211a and portion 328a having a lower height.

Protruding portion 330 having a cylindrical shape has a constant opening width in the length direction (extending direction of extending portion 214), and the opening width matches the width of wire 410 in the length direction. In addition, protruding portion 330 has a constant opening width in the side surface direction (a direction connecting the side surfaces of the outer shell), and the opening width matches the width of wire 410 in the side surface direction. As a result, wire 410 is held by protruding portion 330 in such a way that wire 410 is in contact with the standing wall of protruding portion 330 in the length direction and the side surface direction. Therefore, when drone 100 is subjected to an impact, wire 410 is less likely to be displaced or pulled, and wire 410 is thus less likely to be cut due to the displacement or the pulling.

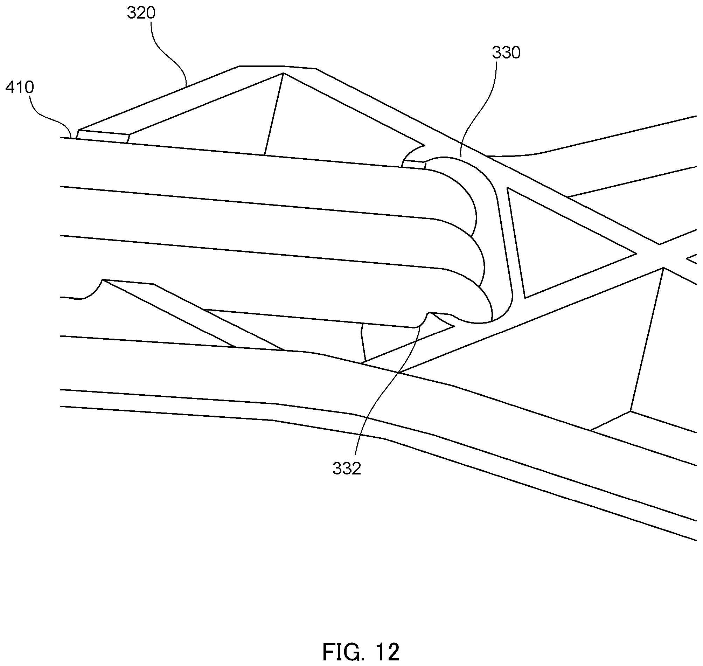

FIG. 12 is a perspective view illustrating the appearance of the periphery of opening 216a as viewed obliquely from below, illustrating another exemplary configuration of protruding portion 330. Protruding portion 330 illustrated in FIG. 12 includes notch portion 332 in which the height of a part of the standing wall is reduced on the housing 110 side. In the example illustrated in FIG. 12, wire 410 is curved along the standing wall of notch portion 332.

The width of notch portion 332 in the side surface direction (a direction connecting the side surfaces of the outer shell) matches the width of wire 410 in the side surface direction. Therefore, wire 410 is held by being embedded in notch portion 332 in such a way that the upper surface of the wire is in contact with the standing wall of notch portion 332 and the side surface of the wire is in contact with vertical walls (having a higher height) located at both ends of notch portion 332.

In this manner, protruding portion 330 illustrated in FIG. 12 holds wire 410 by notch portion 332. Therefore, when drone 100 is subjected to an impact, wire 410 is less likely to be displaced or pulled, and wire 410 is thus less likely to be cut due to the displacement or the pulling.

In addition, as protruding portion 330 illustrated in FIG. 12, when protruding portion 330 is disposed to be in contact with ribs 320, the reinforcing effect of ribs 320 can be improved by protruding portion 330, and the strength of protruding portion 330 can also be improved by ribs 320.

Protruding portion 330 illustrated in FIGS. 9 to 12 includes a curved end portion, namely the lower end (distal end in the protruding direction of protruding portion 330) of the standing wall (the standing wall of protruding portion 330 on the housing 110 side in FIGS. 9 to 11, and notch portion 332 in FIG. 12) in contact with the curved wire 410. The curved end portion is rounded to have a curvature corresponding to a curvature at which wire 410 is curved. By providing the curved end portion in this manner, wear of wire 410 that comes into contact with protruding portion 330 due to friction can be reduced.

Arm 130 of the present embodiment having such a configuration can take out wire 410 perpendicularly to outer shell 310 through protruding portion 330 and opening 216a. Therefore, it is easy to connect the taken-out wire to motor 124.

In addition, in the arm, wire 410 is held and fixed by protruding portion 330 (and notch portion 332). Therefore, when drone 100 is subjected to an impact, wire 410 is less likely to be displaced or pulled, and wire 410 is thus less likely to be cut due to the displacement or the pulling.

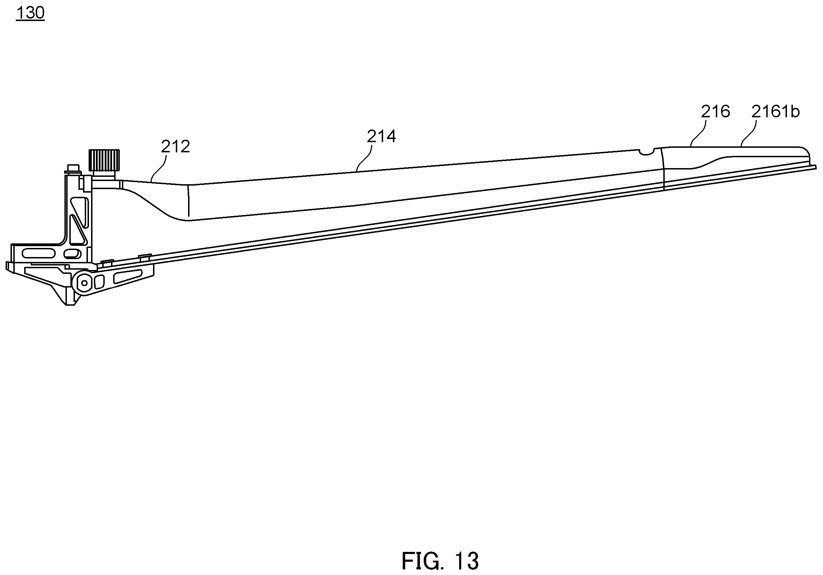

FIG. 13 is a side view illustrating an overall configuration of arm 130. As illustrated in FIGS. 2 to 6 and 13, extending portion 214 has a shape such that its cross-sectional area decreases from the base portion 212 side toward the distal end portion 216 side (toward the distal end side of arm 130). Specifically, extending portion 214 has a shape such that the width (the width in a direction connecting the side surfaces of extending portion 214) decreases from the base portion 212 side toward the distal end portion 216 side. In addition, extending portion 214 has a shape such that the height (the length in the vertical direction between the top surface and the bottom surface of the extending portion) decreases from the base portion 212 side toward the distal end portion 216 side. As a result, the weight of arm 130 can be reduced, and the rigidity of extending portion 214 can also be increased. Extending portion 214 may have a shape such that one of the width and the height decreases from the base portion 212 side toward the distal end portion 216 side.

In addition, as illustrated in FIG. 13, distal end portion 216 is disposed at a higher position than base portion 212. As a result, arm 130 can more reliably prevent rotor 122 from colliding with housing 110, and arm 130 can be shortened to further reduce the weight of drone 100.

In addition, as illustrated in FIG. 13, arm 130 has different angles at the upper end thereof between extending portion 214 and distal end portion 216. Specifically, extending portion 214 has a shape such that the upper end is inclined upward in order to increase the position of distal end portion 216. On the other hand, distal end portion 216 is disposed in such a way that disposition surface 2161b, which is the upper end of holding portion 2161 and on which rotor unit 120 is disposed, is parallel to housing 110 and hinge 420. As a result, rotor 122 can be rotated with respect to housing 110 in the horizontal direction, thereby stabilizing the flight of drone 100.

Arm 130 includes main body portion 210 (base portion 212, extending portion 214, and distal end portion 216), flange 220 (flange 222, flange 224, and flange 226), and ribs 320, all of which are integrally molded from a fiber-reinforced resin containing a thermoplastic resin and reinforcing fibers. By using the fiber-reinforced resin as the material for arm 130, the weight of the arm can be reduced while increasing the rigidity. By producing arm 130 from the thermoplastic resin, arm 130 can be produced by a method such as press molding or injection molding, and the production efficiency is significantly improved. The thermoplastic resin may be derived from a fossil fuel, may be derived from a biomass raw material, or may be a mixture thereof.

Examples of the thermoplastic resin include polyolefin resins such as polyethylene, polypropylene, polybutene, and poly(4-methyl-1-pentene), polyamide resins, polyester resins, polystyrene resins, thermoplastic polyimide resins, polyamideimide resins, polycarbonate resins, polyphenylene ether resins, polyphenylene sulfide resins, polyacetal resins, acrylic resins, polyetherimide resins, polysulfone resins, polyetherketone resins, polyetheretherketone resins, polyarylate resins, polyethernitrile resins, vinyl chloride resins, ABS resins, and fluororesins.

Among these, a polyamide resin and a polyolefin resin are preferable because they are less likely to be damaged even in a case of collision with flying objects such as pebbles, and the reliability of arm 130 can be improved. In addition, from the viewpoint of suppressing a decrease in mechanical characteristics of arm 130 when the arm absorbs water, a polyolefin resin is more preferable, and a polypropylene resin is still more preferable.

The thermoplastic resin may be a resin composition containing an additive. Examples of the additive include known fillers (inorganic fillers and organic fillers), pigments, dyes, weatherability stabilizers, heat stabilizers, antistatic agents, antislip agents, antioxidants, fungicides, antibacterial agents, flame retardants, and softening agents.

Examples of the reinforcing fiber include carbon fibers, glass fibers, aramid fibers, alumina fibers, silicon carbide fibers, boron fibers, and metal fibers. Among these, from the viewpoint of reducing the density to reduce the weight of arm 130 and further increasing the specific rigidity, carbon fibers and aramid fibers are preferable, and carbon fibers are more preferable.

From the viewpoint of increasing the rigidity of arm 130, it is preferable that the fiber-reinforced resin includes a unidirectional layer formed of a unidirectional sheet (UD sheet) in which reinforcing fibers (preferably, carbon fibers) arranged to be oriented in one direction are impregnated with a thermoplastic resin. Arm 130 may be a laminate including a plurality of unidirectional layers in which the reinforcing fibers are oriented in different directions. In addition, arm 130 may be a laminate including a random layer including a plurality of portions (in each of which reinforcing fibers are oriented in one direction) are disposed and the orientation of the reinforcing fibers is different for each of the plurality of portions. The random layer can be obtained by cutting a random sheet obtained by cutting a UD sheet into chips and randomly laying the chips and molding the chips. It is preferable that arm 130 is a laminate including two types of unidirectional layers, that is, an oriented layer in which all of the reinforcing fibers in the layer are oriented in one direction and a random layer.

Arm 130 can be produced by disposing a UD sheet or a random sheet, which has been pre-shaped into the shape of arm 130, in a mold and performing heating press. According to the findings of the present inventors, disposing a random sheet on the side opposite to the rib and performing heating press causes the reinforcing fibers in the random sheet to enter the rib, thereby producing an integrally molded body in which rib 320 also contains the reinforcing fibers.

### [Other Embodiments]

It should be noted that the above-described embodiments are merely exemplary embodiments of the present invention, and it goes without saying that the present invention can take on various modified embodiments within the scope of the technical ideas disclosed in the present specification.

In addition, in the above-described embodiment, the arm has a shape such that the lower surface thereof is open, but a cover for protecting the wire may be disposed on the opened surface of the main body portion. The cover may have a flat plate shape or a semi-cylindrical shape that bulges downward. The cover may be attached by forming an opening in the flange and inserting a fastening screw into the opening, or the cover may be attached by an adhesive.

In addition, in the above-described embodiment, the main body portion has a semi-cylindrical shape having a curved surface, but may have any shape that is a rod shape such as that of a triangular prism, a quadrangular prism, a hexagonal prism, a circular cylinder, or an elliptical cylinder. In any of these shapes, at least one surface of the surfaces (of the main body portion) along the longitudinal direction of the main body portion may be open. On the other hand, the main body portion does not have to include an opened surface on a surface along the longitudinal direction.

In addition, it is obvious to those skilled in the art that the present specification also discloses arms for a drone and a drone described below.
[1] An arm for a drone, the arm being configured to be attached to a housing of the drone, the arm including:
   a main body portion to be disposed outside the housing and including a distal end portion at the distal end of the main body portion, the distal end portion being a portion to which a separate member is to be attached; and
   a holding portion disposed in the main body portion and configured to hold a wire that connects the housing with the separate member.
[2] The arm according to [1], in which:
   the main body portion includes an outer shell and a reinforcing rib disposed inside the outer shell; and
   the holding portion is formed in a part of the reinforcing rib.
[3] The arm according to [2], in which:
   the reinforcing rib has a plurality of heights, and a portion having a lower height is continuously formed in the reinforcing rib; and
   in the holding portion, the portion having a lower height in the reinforcing rib is formed by being disposed along a wiring path.
[4] The arm according to [3], in which:
   the reinforcing rib includes a plurality of plate-shaped ribs disposed to intersect each other; and
   the portion having a lower height is formed at an intersection portion of the plate-shaped ribs.
[5] The arm according to any one of [2] to [4], in which
   the reinforcing rib is integrally molded with the outer shell.
[6] The arm according to any one of [1] to [5], in which
   the main body portion has a shape of a rod with at least one surface of surfaces along a longitudinal direction of the main body portion being open.
[7] The arm according to any one of [1] to [7], in which
   the main body portion is made of a fiber-reinforced resin containing reinforcing fibers and a thermoplastic resin.
[8] The arm according to any one of [1] to [7], in which
   the main body portion includes a unidirectional layer, the unidirectional layer containing carbon fibers arranged to be oriented in one direction and a thermoplastic resin.
[9] A drone comprising:
   the arm according to any one of [1] to [8];
   a separate member that is attached to the distal end portion;
   a housing to which the arm is attached; and
   a wire that connects the housing with the separate member, the wire being disposed inside the arm and held by the holding portion.

In addition, it is obvious to those skilled in the art that the present specification also discloses arms for a drone and a drone described below.
[1] An arm for a drone, the arm being configured to be attached to a housing of the drone, the arm including a distal end portion to which a separate member is to be attached, the arm comprising:
   an outer shell that includes an opening for taking out a wire from an inside of the arm, the wire being configured to be taken out to the separate member; and
   a protruding portion in which a peripheral edge of the opening protrudes toward the inside of the outer shell, in which
   the wire disposed inside the outer shell is curved at the protruding portion and is taken out through the opening.
[2] The arm according to [1], in which
   the protruding portion has a height corresponding to a height at which the wire is disposed inside the outer shell.
[3] The arm according to [1] or [2], in which
   the protruding portion includes a notch portion that holds the curved wire.
[4] The arm according to any one of [1] to [3], in which
   at a distal end of the protruding portion in a protruding direction of the protruding portion, the protruding portion includes a curved end portion having a shape corresponding to a curve of the wire.
[5] The arm according to any one of [1] to [4], in which
   the protruding portion is integrally molded with the outer shell.
[6] The arm according to any one of [1] to [5], further comprising:
   a reinforcing rib inside the outer shell, wherein
   the protruding portion is disposed to be in contact with the reinforcing rib.
[7] The arm according to any one of [1] to [6], in which
   the outer shell has a shape of a rod with at least one surface of surfaces along a longitudinal direction of the main body portion being open.
[8] The arm according to any one of [1] to [7], in which
   the outer shell and the protruding portion are made of a fiber-reinforced resin containing reinforcing fibers and a thermoplastic resin.
[9] The arm according to any one of [1] to [8], in which
   the outer shell includes a unidirectional layer, the unidirectional layer containing carbon fibers arranged to be oriented in one direction and a thermoplastic resin..
[10] A drone comprising:
   the arm according to any one of [1] to [9];
   a separate member that is attached to a distal end of the arm;
   a housing to which the arm is attached; and
   a wire that connects the housing with the separate member, the wire being disposed inside the outer shell and taken out through the opening to an outside of the outer shell.

In addition, the above-described embodiment has described the arm that holds the rotor unit at its distal end, but the arm may hold a separate member other than the rotor unit at the distal end. For example, the arm may hold a robot arm, a camera, a light emitting member (LED or the like), or the like at the distal end.

The present application is entitled to and claims the benefit of Japanese Patent Application No. 2023-119340 filed on July 21, 2023, the disclosure of which including the specification, claims, and drawings is incorporated herein by reference in its entirety.

### Industrial Applicability

The arm for a drone according to the present invention has high rigidity. Therefore, it is easy to increase the size of the drone or to improve the durability. In addition, since the arm for a drone according to the present invention is made of a thermoplastic resin, it is easy to mass-produce the arm for a drone.

### Reference Signs List

100 Drone
110 Housing
112 Lower body
114 Upper body
116 Fastening screw
118 Attachment portion
118a Fastening hole
118b Fastening screw
118c Projecting portion
118d Attachment screw
1182 Introduction port
120 Rotor unit
122 Rotor
124 Motor
130 Arm
210 Main body portion
211 Base wall
211a Opening
212 Base portion
212c Nut portion
214 Extending portion
216 Distal end portion
216a Opening
2161 Holding portion
2161a Fastening hole
2161b Disposition surface
2162 Connection portion
220, 222, 224, 226 Flange
222a Fastening hole
222b Fastening screw
310 Outer shell
320, 322, 324, 326 Rib
320a, 320b Plate-shaped rib
328a Portion having lower height
328b Portion having higher height
330 Protruding portion
332 Notch portion
410 Wire
420 Hinge

## Claims

1. An arm for a drone, the arm being configured to be attached to a housing of the drone, the arm comprising:
a main body portion to be disposed outside the housing; and
a flange disposed laterally outside the main body portion, wherein
the main body portion and the flange are made of a fiber-reinforced resin containing a reinforcing fiber and a thermoplastic resin.

2. The arm according to claim 1, wherein:
the arm includes a fastening hole for fastening the arm to the housing; and
the fastening hole is disposed in the flange.

3. The arm according to claim 1 or 2, wherein:
the main body portion includes a base portion and an extending portion, the base portion being configured to be fastened to the housing, the extending portion extending outward from the base portion; and
the flange is disposed on the base portion.

4. The arm according to claim 3, wherein:
the flange is disposed on the base portion and the extending portion; and
a protruding width of the flange at the base portion is greater than a protruding width of the flange at the extending portion.

5. The arm according to claim 3 or 4, wherein:
the main body portion includes a distal end portion disposed at a distal end of the extending portion, the distal end portion being a portion to which a separate member is to be attached; and
the distal end portion includes the flange.

6. The arm according to any one of claims 1 to 5, wherein
the flange is integrally molded with the main body portion.

7. The arm according to any one of claims 1 to 6, further comprising:
a reinforcing rib inside the main body portion.

8. The arm according to any one of claims 1 to 7, wherein
the main body portion has a shape of a rod with at least one surface of surfaces along a longitudinal direction of the main body portion being open.

9. The arm according to any one of claims 1 to 8, wherein
the main body portion and the flange include a unidirectional layer, the unidirectional layer containing carbon fibers arranged to be oriented in one direction and a thermoplastic resin.

10. The arm according to any one of claims 1 to 9, wherein
a separate member is attached to a distal end portion of the main body portion; and the arm further includes a holding portion disposed in the main body portion and configured to hold a wire that connects the housing with the separate member.

11. The arm according to any one of claims 1 to 10, wherein:
a separate member is attached to a distal end portion of the main body portion;
the arm further includes an outer shell including an opening for taking out a wire from an inside of the arm, the wire being configured to be taken out to the separate member;
the arm further includes a protruding portion in which a peripheral edge of the opening protrudes toward an inside of the outer shell; and
the wire disposed inside the outer shell is curved at the protruding portion and is taken out through the opening.

12. A drone comprising:
the arm according to any one of claims 1 to 11; and
a housing to which the arm is fastened.

13. The drone according to claim 12, wherein:
the arm is fastened to the housing via a hinge; and
the arm is foldable by bending of the hinge.
